# EUROPÄISCHE PATENTSCHRIFT

(11) **EP 0 937 214 B1**
(45) Veröffentlichungstag und Bekanntmachung des Hinweises auf die Patenterteilung: **26.02.2003**
(21) Anmeldenummer: 97948875.6
(22) Anmeldetag: 04.11.1997
(51) Int. Cl.: F16G 13/16

(54) **BEFESTIGUNGSANORDNUNG MIT EINEM KETTENGLIED UND EINER BEFESTIGUNGSEINHEIT FÜR LEITUNGEN**
FASTENING ARRANGEMENT WITH A CHAIN LINK AND A FIXING UNIT FOR LINES
DISPOSITIF DE FIXATION AVEC UN MAILLON ET UNE UNITE DE FIXATION POUR LIGNES

(30) Priorität: 14.11.1996 DE 29619833 U
(43) Veröffentlichungstag der Anmeldung: 25.08.1999
(73) Patentinhaber: Kabelschlepp Gesellschaft mit beschränkter Haftung, 57074 Siegen (DE)
(72) Erfinder: WEBER, Willibald, D-57250 Netphen (DE); MÜLLER, Roland, D-57076 Siegen (DE)
(74) Vertreter: Kahlhöfer, Hermann, Dipl.-Phys.
(86) Internationale Anmeldenummer: EP9706078
(87) Internationale Veröffentlichungsnummer: WO98021503

(56) Entgegenhaltungen:
- DE-A- 4 409 517
- DE-U- 9 417 379

## Beschreibung

Die Erfindung bezieht sich auf eine Befestigungsanordnung mit einem Kettenglied und mit einer Befestigungseinheit für Leitungen.

Zur Versorgung von beweglichen Apparaten und Maschinen mit Verbrauchsmitteln aller Art werden Versorgungsleitungen verwendet, die in einer Energieführungskette geführt werden. Das eine Ende der Energieführungskette ist stationär angeordnet. Das andere Ende der Energieführungskette ist mit dem Apparat oder einer Maschine verbunden. Die Energieführungskette umfaßt eine Vielzahl von gelenkig miteinander verbundenen Kettengliedern.

Während des Betriebes unterliegt die Energieführungskette einer Biegewechselbeanspruchung. Auch die in der Energieführungskette geführten und gehaltenen Versorgungsleitungen werden auf Wechselbiegung beansprucht. Es ist daher erforderlich, daß die Versorgungsleitungen wenigstens am beweglichen Ende der Energieführungskette zugentlastet befestigt sind. Ein Beispiel für eine zugentlastende Befestigung der Leitungen ist durch das Gebrauchsmuster DE-U-94 17 379, entsprechend dem Oberbegriff der Ansprüche 1 und 13, bekannt. Zur zugentlastenden Befestigung der Leitungen wird vorgeschlagen, daß das Endbefestigungsteil für Energierührungsketten ein kamm- bzw. rechenartiges Anschlußprofil aufweist, dessen an einem Tragprofil angeordnete Zinken sich in Längsrichtung der Energieführungskette bzw. der Versorgungsleitungen im Abstand zueinander erstrecken. Das Tragprofil ist zwischen den Kettenlaschen des Endbefestigungskettengliedes angeordnet oder befestigbar. Das Anschlußteil kann einstückig mit dem Kettenendbefestigungsglied ausgebildet sein. Desweiteren ist bekannt, daß das kamm- bzw. rechenartige Anschlußteil mit seinem Tragprofil in eine Haltenut einer bodenseitigen Befestigungsleiste des Endbefestigungskettengliedes einsetzbar ist.

Durch die DE 44 09 517 A1 ist eine Einrichtung zur Zugentlastung für Leitungen bekannt. Die Einrichtung umfaßt einen kammartigen Körper sowie Verbindungselemente, durch die die Versorgungsleitungen mit den in Leitungsrichtung sich erstreckenden Zinken verbindbar sind. Bei den Verbindungselementen handelt es sich um an und für sich bekannte Kabelhalter. Der Körper weist Zinken auf, die zu seinen beiden Seiten und in entgegengesetzter Richtung ausgebildet sind, wobei die Zinken auf der einen Seite breiter sind als die Zinken auf der anderen Seite.

Der vorliegenden Erfindung liegt die Aufgabe zugrunde eine Befestigungsanordnung mit einem Kettenglied und einer Befestigungseinheit bzw. ein Befestigungskettenglied mit einer Befestigungreinheit für Versorgungsleitungen anzugeben, welche raumsparend ausgebildet ist. Ein weiteres Ziel der vorliegenden Erfindung ist es eine Befestigungsanordnung anzugeben, durch die die mechanische Belastung der Befestigungseinheit vermindert wird.

Diese Aufgaben werden erfindungsgemäß durch eine Befestigungsanordnung bzw. ein Befestigungskettenglied mit den Merkmalen der Ansprüche 1 und 13 gelöst. Vorteilhafte Weiterbildungen und Ausgestaltungen sind Gegenstand der Unteransprüche.

Die erfindungsgemäße Befestigungsanordnung umfaßt ein Kettenglied sowie eine Befestigungseinheit. Das Kettenglied weist zwei voneinander beabstandete einander gegenüberliegende Kettenlaschen auf. Jede Kettenlasche hat Randund Seitenflächen. Die Kettenlaschen sind durch eine Traverse miteinander verbunden. Die Befestigungseinheit weist sich in Längsrichtung der Kettenlaschen erstreckende, voneinander beabstandete Stege auf. Die Befestigungseinheit, die Traverse und/oder wenigstens eine Kettenlasche weisen zusammenwirkende Verbindungsmittel auf, wodurch die Befestigungseinheit mit einwärts in das oder einwärts in das und auswärts aus dem Kettenglied gerichteten Stegen mit der Traverse und/oder wenigstens einer Kettenlasche verbindbar ist. Die Befestigungseinheit kann bei der erfindunsgemäßen Befestigungsanordnung so mit der Traverse und/oder wenigstens einer Kettenlasche verbunden sein, daß die Stege der Befestigungseinheit in das Kettenglied einwärts gerichtet sind. Durch diese Ausgestaltung der Befestigungsanordnung wird kein zusätzlicher Einbauraum benötigt, da die Befestigungseinheit sich über das Kettenglied hinaus nicht erstreckt. Durch diese Maßnahme wird eine Befestigungsanordnung mit einem Kettenglied und einer Befestigungseinheit bereitgestellt, die auch bei bereits sich in Betrieb befindenden Energieführungsketten verwendbar ist. Es wird somit eine Möglichkeit gegeben, die Energieführungsketten mit der erfindungsgemäßen Befestigungsanorndnung nachzurüsten. Der Nachrüstaufwand ist relativ gering, wie dies im weiteren noch ausführlicher erläutert ist. Es bedarf lediglich des Austausches des Befestigungskettengliedes.

Durch die erfindungsgemäße Befestigungsanordnung wird auch die Möglichkeit geschaffen, jede Versorgungsleitung an zwei in Längsrichtung der Versorgungsleitung zueinander beabstandeten Bereichen zu befestigen. Die Befestigung der Versorgungsleitung kann mit den einwärts in das Kettenglied sowie mit den auswärts aus dem Kettenglied gerichteten Stegen verbunden werden. Die Verbindung einer Versorgungsleitung mit den einwärts gerichteten und den auswärts gerichteten Stegen kann mittels der an und für sich bekannten flexiblen Leitungshaltern erfolgen. Durch diese Ausgestaltung der Befestigungsanordnung wird sichergestellt, daß die Versorgungsleitung stets zuverlässig mit der Befestigungseinheit verbunden ist. Bei Versagen oder unkorrekter Anbringung eines Leitungshalters übernimmt der weitere Leitungshalter die Befestigungsaufgabe. Desweiteren wird durch diese Anordnung eine günstigere Kräfteeinleitung, die von einer Versorgungsleitung her stammt, in die Befestigungseinheit und somit in das Kettenglied erreicht, wodurch dieses in einem geringeren Umfang mechanisch beansprucht wird.

Bevorzugt ist eine Befestigungsanordnung, bei der die Befestigungseinheit Verbindungsmittel aufweist, die die Traverse wenigstens teilweise umgreifen. Diese Ausgestaltung hat den Vorzug, daß die Befestigungseinheit auf der Traverse leichter positionierbar ist und zum anderen eine großflächige Kräfteeinleitung in die Traverse ermöglicht wird.

Nach einer weiteren vorteilhaften Ausgestaltung wird vorgeschlagen, daß das Verbindungsmittel wenigstens einen Anschlag aufweist, der wenigstens zur Anlage an einen im wesentlichen quer zur Längsrichtung des Kettengliedes verlaufenden Randbereich der Traverse bringbar ist. Bevorzugt ist hierbei eine Ausgestaltung, bei der die Traverse zwischen zwei als Verbindungsmittel ausgebildeten Anschlägen angeordnet ist. Der Abstand zwischen den Anschlägen kann hierbei so bemessen sein, daß das Verbindungsmittel auf die Traverse aufgepreßt wird. Hierdurch kann bereits eine teilweise vormontierte Befestigungsanordnung bereitgestellt werden.

Die Anschläge des Verbindungsmittels sind vorzugsweise in Form einer Rippe ausgebildet. Die Befestigungseinheit ist vorzugsweise einstückig ausgebildet. Das verwendete Material zur Herstellung einer Befestigungseinheit ist abhängig von dem Einsatzgebiet. Bevorzugt ist hierbei eine Ausgestaltung der Befestigungseinheit aus einem Kunststoff. Die Stege sind bei einer einstückigen Ausgestaltung der Befestigungseinheit wenigstens teilweise an den Anschlägen angeformt.

Nach einer weiteren besonders vorteilhaften Ausgestaltung der Befestigungsanordnung wird vorgeschlagen, daß die Traverse beabstandet zu den in Längsrichtung verlaufenden Randflächen zwischen den Kettenlaschen angeordnet ist, wobei die Befestigungseinheit, vorzugsweise an der Traverse anliegend, mit den in Längsrichtung verlaufenden Randflächen wenigstens teilweise fluchtet. Durch diese Ausgestaltung der Befestigungsanordnung wird die Befestigungseinheit durch die Traverse gegen eine ebene Auflage- bzw. Anlagefläche gedrückt, gegen die auch die in Längsrichtung verlaufenden Randflächen der Kettenlaschen gepreßt werden.

Die Traverse weist vorzugsweise Verbindungsmittel in Form wenigstens einer Rastnocke auf, die in eine entsprechende Aufnahme der Befestigungseinheit eingreift. Bevorzugt sind mindestens zwei voneinander beabstandete, auf einer im wesentlichen quer zur Längsrichtung verlaufenden Linie angeordnete Rastnocken. Die Befestigungseinheit kann für jede Rastnocke eine gesonderte Aufnahme aufweisen. Möglich ist auch eine Ausgestaltung der Befestigungseinheit, bei der beispielsweise zwei Rastnocken in eine gemeinsame Aufnahme hineinragen. Diese Ausgestaltung der Befestigungseinheit ist insbesondere dann zweckmäßig, wenn der Abstand zwischen zwei Kettenlaschen relativ gering ist.

Zur vereinfachten und zweckmäßigen Montage der erfindungsgmäßen Befestigungsanordnung wird vorgeschlagen, daß wenigstens zwei der Rastnocken jeweils eine Durchgangsbohrung aufweisen, und die Rastnocken mit den in Längsrichtung verlaufenden Randflächen wenigstens teilweise fluchten. Durch diese Ausgestaltung kann ein Austausch der bereits bekannten Befestigungskettenglieder erfolgen, ohne daß der Montageaufwand erhöht wird. Das Kettenglied kann auch einzeln, d.h. ohne eine Befestigungseinheit als Endbefestigungskettenglied verwendet werden, da die Anpreßkraft an eine An- oder Auflagefläche durch die mit den in Längsrichtung verlaufenden Randflächen wenigstens teilweise fluchtenden Rastnocken eingeleitet wird.

Eine weitere vorteilhafte Ausgestaltung der Befestigungsanordnung besteht darin, daß jede Kettenlasche in einer sich in Längsrichtung verlaufenden Randfläche eine Aussparung zur form- und/oder kraftschlüssigen Halterung der Befestigungseinheit aufweist. Bei einer solchen Ausgestaltung der Kettenlaschen kann auf die Ausgestaltung von Rastnocken verzichtet werden, da deren funktionale Aufgabe durch die Aussparungen in der sich in Längsrichtung verlaufenden Randfläche der Kettenlasche übernommen wird.

Desweiteren wird ein erfindungsgemäßes Befestigungskettenglied, insbesondere ein Endbefestigungsglied einer Energieführungskette vorgeschlagen, das zwei voneinander beabstandete einander gegenüberliegende Kettenlaschen mit Randund Seitenflächen und wenigstens eine die Kettenlasche verbindende Traverse aufweist. Das Befestigungskettenglied hat eine Befestigungseinheit, die sich in Längsrichtung der Kettenlaschen erstreckende, voneinander beabstandete Stege hat. Die Befestigungseinheit, die Traverse und/oder wenigstens eine Kettenlasche des Befestigungskettengliedes weisen zusammenwirkende Verbindungsmittel auf, wodurch die Befestigungseinheit, vorzugsweise lösbar, mit einwärts in das Kettenglied oder einwärts in das und auswärts aus dem Kettenglied gerichteten Stegen mit der Traverse und/oder wenigstens eine Kettenlasche verbindbar ist. Die Weiterbildungen des Befestigungskettengliedes entsprechen vorzugsweise den Weiterbildungen der Befestigungsanordnung nach den Ansprüche 2 bis 12.

Weitere Vorteile und Einzelheiten der erfindungsgemäßen Befestigungsanordnung werden anhand von drei in der Zeichnung dargestellten Ausführungsbeispielen erläutert. Es zeigen:
- Fig. 1: ein erstes Ausführungsbeispiel einer Befestigungsanordnung im Schnitt,
- Fig. 2: die Befestigungsanordnung nach Fig. 1 in einer Draufsicht,
- Fig. 3: ein Kettenglied der Befestigungsanordnung nach Fig. 1 in einer Unteransicht,
- Fig. 4: eine Befestigungseinheit der Befestigungsanordung nach Fig. 1 in der Vorderansicht,
- Fig. 5: die Befestigungseinheit nach Fig. 4 in einer Draufsicht,
- Fig. 6: ein zweites Ausführungsbeispiel einer Befestigungsanordnung im Schnitt,
- Fig. 7: die Befestigungsanordnung nach Fig. 6 in der Draufsicht,
- Fig. 8: eine Befestigungseinheit der Befestigungsanordnung nach Fig. 6 in der Draufsicht,
- Fig. 9: ein drittes Ausführungsbeispiel einer Befestigungsanordnung im Schnitt,
- Fig. 10: die Befestigungsanordnung nach Fig. 3 in einer Draufsicht,
- Fig. 11: eine Befestigungseinheit der Befestigungsanordnung nach Fig. 9 in einer Draufsicht,
- Fig. 12: eine weitere Ausgestaltung einer Befestigungseinheit,
- Fig. 13: ein Kettenglied einer Befestigungsanordnung nach Fig. 9 in einer Draufsicht,
- Fig. 14: eine Ausführungsform eines Kettenglieds für eine Befestigungsanordnung in der Vorderansicht,
- Fig. 15: eine Schnittansicht des Kettengliedes nach Fig. 14 entlang der Schnittlinie A-A,
- Fig. 16: eine Unteransicht des Kettengliedes nach Fig. 14,
- Fig. 17: vergrößert eine Einzelheit Z des Kettengliedes nach Fig. 14.

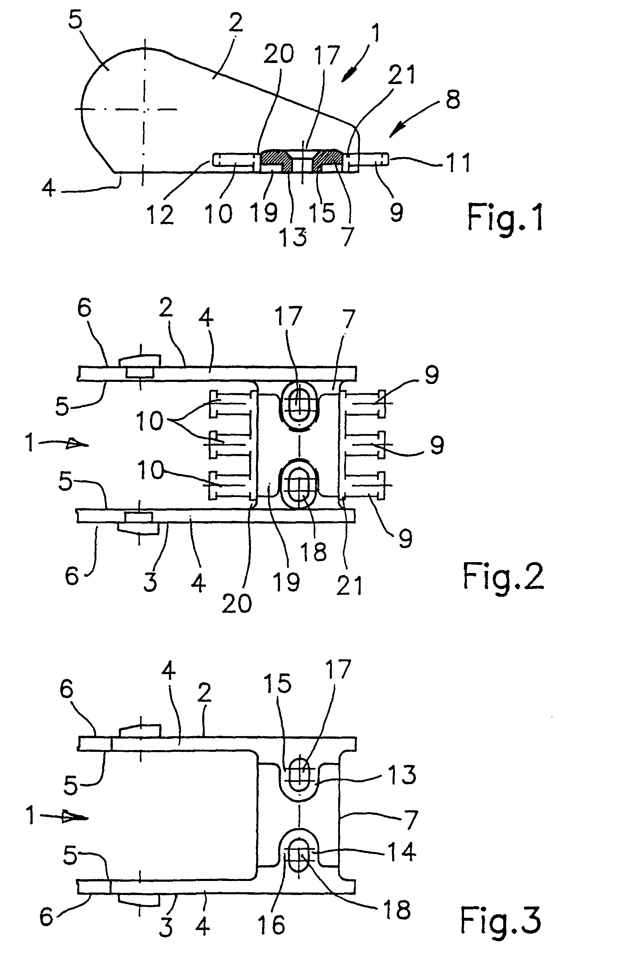

Fig. 1 und 2 zeigen eine erste Ausführungsform einer Befestigungsanordnung. Die Befestigungsanordnung hat ein Kettenglied 1. Das Kettenglied 1 weist zwei voneinander beabstandete einander gegenüberliegende Kettenlaschen 2, 3 auf. Jede Kettenlasche 2, 3 weist eine Randfläche 4 auf, welche an einer Anlage, welche nicht dargestellt ist, im montierten Zustand der Befestigungsanordnung anliegt. Jede Kettenlasche 2, 3 hat Seitenflächen 5, 6. Die Kettenlaschen 2, 3 sind über eine Traverse 7 miteinander verbunden. Die Befestigungsanordnung weist eine Befestigungseinheit 8 auf. Die Befestigungseinheit 8 hat sich in Längsrichtung der Kettenlaschen 2, 3 erstreckende, voneinander beabstandete Stege 9, 10, die entgegengesetzt gerichtet ausgebildet sind. Jeder Steg 9, 10 weist an seinem freien Ende einen Kopf 11 bzw. 12 auf, der im Querschnitt größer ist als der Querschnitt des Stegs 9 bzw. 10.

Die Befestigungsanordnung weist ferner Verbindungsmittel auf, durch die die Befestigungseinheit 8 mit der Traverse 7 zusammenwirken, wodurch die Befestigungseinheit 8 mit einwärts in das Kettenglied 1 gerichteten Stegen 10 und mit auswärts aus dem Kettenglied 1 gerichteten Stegen 9 verbindbar ist.

Wie aus der Fig. 1 ersichtlich ist, ist die Traverse 7 beabstandet zu der in Längsrichtung verlaufenden Randfläche 4 ausgebildet. Die Traverse 7 weist Verbindungsmittel in Form von Rastnocken 13, 14 auf. Die Rastnocken 13, 14 sind voneinander beabstandet und liegen auf einer im wesentlichen quer zur Längsrichtung des Kettengliedes verlaufenden Linie. Die Stirnflächen 15, 16 der Rastnocken 13, 14 sind eben ausgebildet und fluchten mit der Randfläche 4 der Kettenlasche 2 bzw. 3. Jede Rastnocke 13, 14 weist eine Durchgangsbohrung 17 bzw. 18 auf. Die Durchgangsbohrungen 17, 18 verlaufen im wesentlichen senkrecht zu der Randfläche 4. Durch die Durchgangsbohrungen 17, 18 können Verbindungsmittel, beispielsweise in Form von Schrauben, hindurchgeführt werden und mit einer Auflage, die nicht dargestellt ist, verschraubt werden.

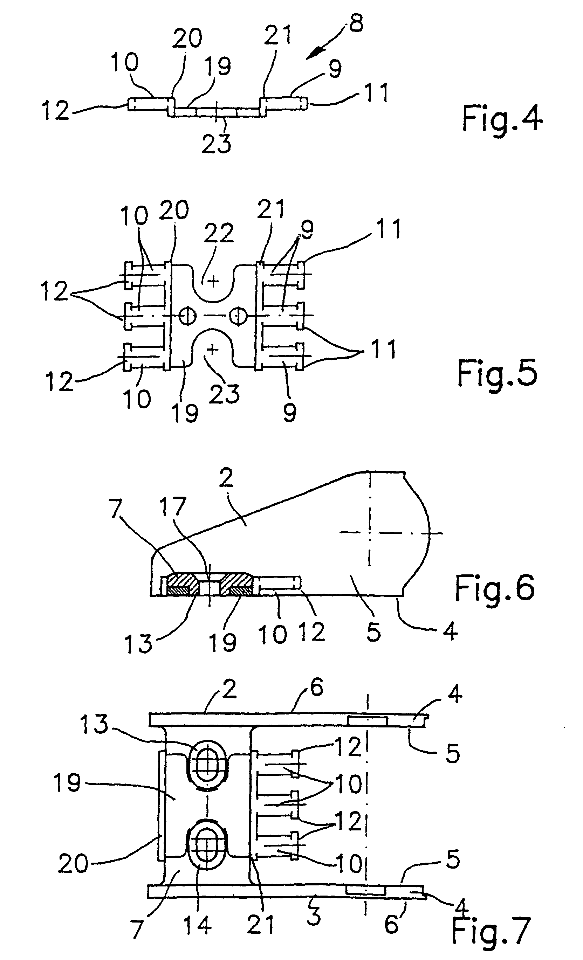

Fig. 4 und 5 zeigen eine Befestigungseinheit 8 der Befestigungsanordnung nach Fig. 1. Die Befestigungseinheit 8 hat einen Halteabschnitt 19. Die Stege 9, 10 sind zu beiden Seiten des Halteabschnitts 19 und in entgegengesetzter Richtung ausgebildet. Der Halteabschnitt 19 ist im wesentlichen plattenförmig ausgebildet. Er weist zwei Anschläge 20, 21 auf, die sich im wesentlichen quer zur Längsrichtung des Kettengliedes 1 erstrecken. Der Halteabschnitt 19 sowie die Anschläge 20, 21 sind so ausgebildet, daß die Traverse 7 zwischen den Anschlägen 20, 21 angeordnet ist, wie dies aus den Figuren 1 und 2 ersichtlich ist. Die Anschläge 20, 21 sind durch Rippen gebildet. Der Halteabschnitt 19 der Befestigungseinheit 8 weist zwei Aufnahmen 22, 23 auf, in die die Rastnocken 13, 14 der Traverse 7 eingreifen. Die Aufnahmen 22, 23 sind durch seitliche Ausnehmungen, wie dies aus der Fig. 5 ersichtlich ist, gebildet.

Die Dicke des Halteabschnitts 19 ist vorzugsweise so gewählt, daß der Halteabschnitt 19 zwischen der Unterseite der Traverse 7 und der Randfläche 4 angeordnet werden kann.

Wir nehmen nunmehr Bezug auf die in den Figuren 6, 7 und 8 dargestellte zweite Ausführungsform einer Befestigungsanordnung. Die Befestigungsanordnung weist ein Kettenglied 1 sowie eine Befestigungseinheit 8 auf. Das Kettenglied umfaßt zwei voneinander beabstandete einander gegenüberliegende Kettenlaschen 2, 3 sowie eine die Kettenlaschen verbindende Traverse 7 auf. Die Befestigungseinheit 8 hat sich in Längsrichtung der Kettenlasche 1 erstreckende, voneinander beabstandete Stege 10. Die Befestigungseinheit 8 und die Traverse 7 weisen zusammenwirkende Verbindungsmittel auf, wodurch die Befestigungseinheit 8 mit einwärts in das Kettenglied 1 gerichteten Stegen 10 mit der Traverse 7 verbindbar ist. Die Ausgestaltung der in den Figuren 6 bis 8 dargestellten Befestigungsanordnung entspricht hinsichtlich der Verbindung der Befestigungseinheit 8 mit der Traverse 7 im wesentlichen der in den Figuren 1 bis 5 dargestellten Befestigungsanordnung. Im Gegensatz zu der in den Fig. 1 bis 5 dargestellten Befestigungsanordnung weist die Befestigungseinheit 24 Stege 10 auf, die sich nur einwärts in das Kettenglied 1 erstrecken. Die Befestigungseinheit 24 hat einen Halteabschnitt 19 mit zwei im Abstand zueinander ausgebildeten Anschlägen 20, 21. Die Anschläge 20, 21 liegen an den Längsrändern der Traverse 7 an. Die Traverse 7 weist Rastnocken 13, 14 auf, die in die Aufnahmen 22, 23, die im Halteabschnitt 19 der Verbindungseinheit 24 ausgebildet sind, hineingreifen.

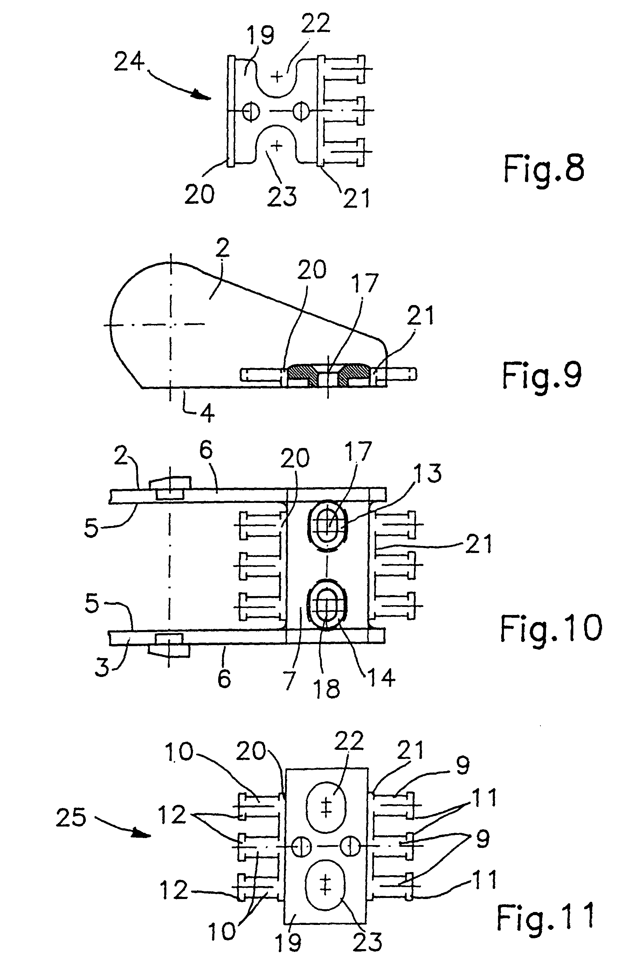

Bei einer Befestigungsanordnung, wie sie in den Fig. 9 und 10 dargestellt ist, ist die Befestigungseinheit 25 entsprechend der Fig. 11 dargestellt. Die Befestigungseinheit 25 weist einen Halteabschnitt 19 auf, der sich über den gesamten Abstand zwischen den Kettenlaschen 2, 3 erstreckt. In den Halteabschnitt 19 sind lochförmige Aufnahmen 22, 23 ausgebildet, in die die Rastnocken 13, 14 hineinragen. Die Innenkontur der Aufnahmen 22, 23 entspricht der Außenkontur der Rastnocken 13, 14. Die Rastnocken 13, 14 können unterschiedliche Geometrie sein, wodurch die Befestigungseinheit 25 nur in einer vorbestimmten Lage mit dem Kettenglied 1 verbindbar ist.

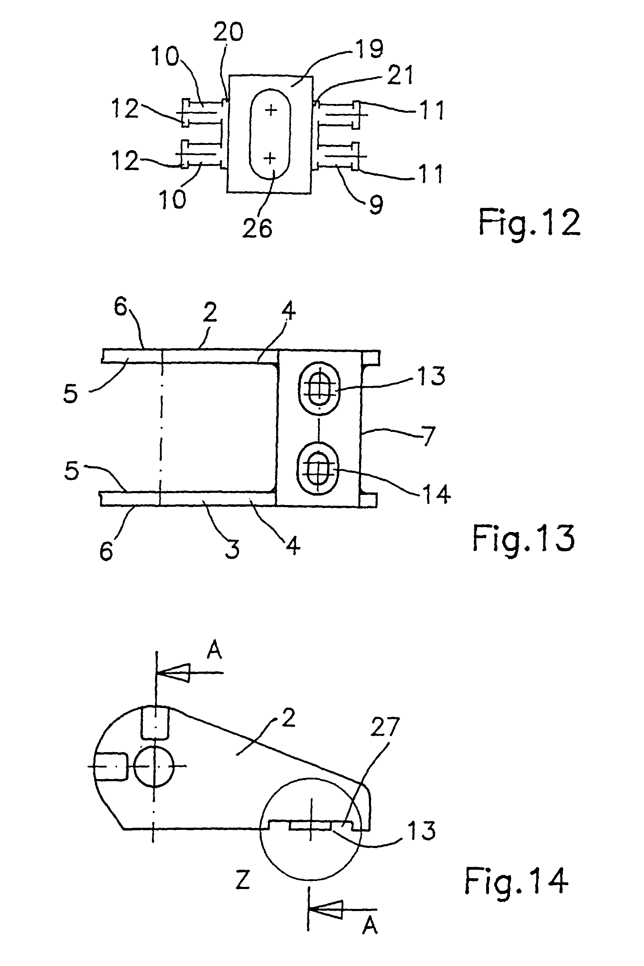

Bei einem relativ geringen Abstand zwischen den Kettenlaschen 2, 3 ist es zweckmäßig, wenn die Rastnocken 13, 14 durch eine einzige Aufnahme 26 gebildet wird, wie dies in der Fig. 12 dargestellt ist. Ein Kettenglied mit einer Traverse 7, welches mit der Befestigungseinheit 8 nach Fig. 11 bzw. 12 verbindbar ist, ist in der Fig. 13 dargestellt.

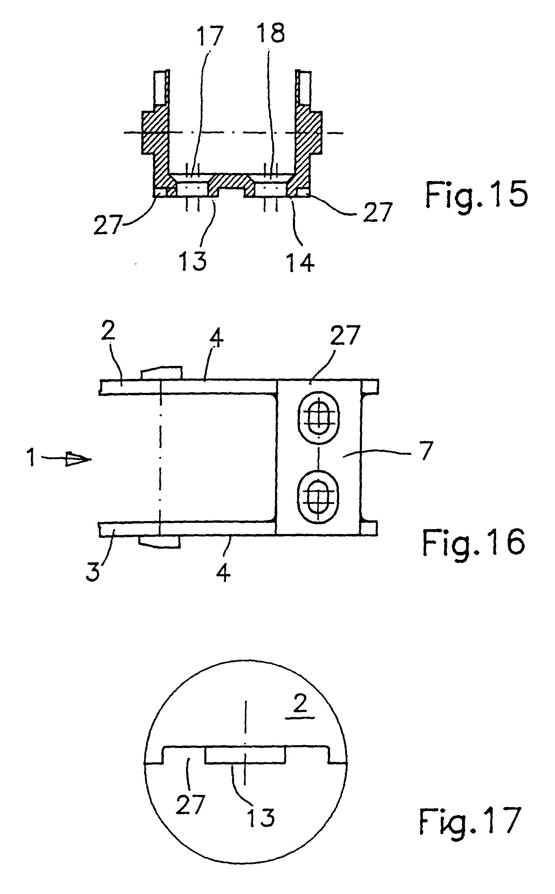

In den Figuren 14 bis 17 ist eine Ausgestaltung des Kettengliedes 1 dargestellt, welches für eine Befestigungsanordnung bevorzugt geeignet ist. Das Kettenglied 1 weist zwei voneinander beabstandete einander gegenüberliegende Kettenlaschen 2, 3 auf. Die Kettenlaschen 2, 3 sind durch eine Traverse 7 miteinander verbunden. Die Traverse 7 weist Rastnocken 13, 14 auf. Die Rastnocken sind auf einer gemeinsamen, im wesentlichen quer zur Längsrichtung des Kettengliedes 1 verlaufenden Geraden ausgebildet. Jeder Rastnocken 13, 14 weist eine Durchgangsbohrung 17, 18 auf. Die Stirnflächen der Rastnocken 13, 14 fluchten mit den Randflächen 4 des Kettengliedes 1. Im Bereich der Traverse 7 weist jede Kettenlasche 2, 3 eine Aussparung 27 auf. Die Aussparung 27 dient zur form- und/oder kraftschlüssigen Halterung einer Befestigungseinheit 8. Vorzugsweise ist die Aussparung 27 im Querschnitt schwalbenschwanzförmig ausgebildet, wie dies aus der Fig. 17 ersichtlich ist. Ein in die Aussparung 27 eingreifender Abschnitt der Befestigungseinheit 8 hat vorzugsweise eine entsprechende Außenkontur.

### Bezugszeichenliste

- 1: Kettenglied
- 2, 3: Kettenlasche
- 4: Randfläche
- 5, 6: Seitenfläche
- 7: Traverse
- 8: Befestigungseinheit
- 9, 10: Steg
- 11, 12: Kopf
- 13, 14: Rastnocken
- 15, 16: Stirnfläche
- 17, 18: Durchgangsbohrung
- 19: Halteabschnitt
- 20, 21: Anschläge
- 22, 23: Aufnahme
- 24, 25: Befestigungseinheit
- 26: Aufnahme
- 27: Aussparung

## Patentansprüche

1. Befestigungsanordnung mit einem Kettenglied (1), das zwei voneinander beabstandete einander gegenüberliegende Kettenlaschen (2, 3) mit Randund Seitenflächen (4, 5, 6) und wenigstens eine die Kettenlaschen (2, 3) verbindende Traverse (7) aufweist, sowie mit einer Befestigungseinheit (8), die sich in Längsrichtung der Kettenlaschen (2, 3) erstreckende, voneinander beabstandete Stege (9, 10) hat, **dadurch gekennzeichnet, daß** die Befestigungseinheit (8), die Traverse (7) und/oder wenigstens eine Kettenlasche (2, 3) zusammenwirkende Verbindungsmittel (13, 14, 20, 21, 22, 23, 26, 27) aufweisen, wodurch die Befestigungseinheit (8) mit einwärts in das oder einwärts in das und auswärts aus dem Kettenglied (1) gerichteten Stegen (9, 10) mit der Traverse (7) und/oder wenigstens einer Kettenlasche (2, 3) verbindbar ist.

2. Befestigungsanordnung nach Anspruch 1, **dadurch gekennzeichnet, daß** die Befestigungseinheit (8) Verbindungsmittel (20, 21) aufweist, die die Traverse (7) wenigstens teilweise umgreifen.

3. Befestigungsanordnung nach Anspruch 2, **dadurch gekennzeichnet, daß** das Verbindungsmittel wenigstens einen Anschlag (20, 21) aufweist, der wenigstens zur Anlage an einen im wesentlichen quer zur Längsrichtung des Kettengliedes (1) verlaufenden Randbereich der Traverse (7) bringbar ist.

4. Befestigungsanordnung nach Anspruch 3, **dadurch gekennzeichnet, daß** die Traverse (7) zwischen zwei als Verbindungsmittel ausgebildeten Anschlägen (20, 21) angeordnet ist.

5. Befestigungsanordnung nach Anspruch 3 oder 4, **dadurch gekennzeichnet, daß** der Anschlag (20, 21) durch eine Rippe gebildet ist.

6. Befestigungsanordnung nach Anspruch 3, 4 oder 5, **dadurch gekennzeichnet, daß** die Stege (9, 10) an den Anschlägen (20, 21) wenigstens teilweise angeformt sind.

7. Befestigungsanordnung nach einem der Ansprüche 1 bis 6, **dadurch gekennzeichnet, daß** die Traverse (7) beabstandet zu den in Längsrichtung verlaufenden Randflächen (4) angeordnet ist, wobei die Befestigungseinheit (8), vorzugsweise an der Traverse (7) anliegend, mit den in Längsrichtung verlaufenden Randflächen (4) wenigstens teilweise fluchtet.

8. Befestigungsanordnung nach Anspruch 7, **dadurch gekennzeichnet, daß** die Traverse (7) Verbindungsmittel in Form wenigstens einer Rastnocke (13, 14) aufweist, die in eine entsprechende Aufnahme (22, 23, 26) der Befestigungseinheit (8) eingreift.

9. Befestigungsanordnung nach Anspruch 8, **dadurch gekennzeichnet, daß** die Traverse (7) mindestens zwei voneinander beabstandete, auf einer im wesentlichen quer zur Längsrichtung verlaufenden Linie angeordnete Rastnocken (13, 14) aufweist.

10. Befestigungsanordnung nach Anspruch 8 oder 9, **dadurch gekennzeichnet, daß** die Rastnocken (13, 14) mit den in Längsrichtung verlaufenden Randflächen (4) wenigstens teilweise fluchten.

11. Befestigungsanordnung nach Anspruch 8, 9 oder 10, **dadurch gekennzeichnet, daß** wenigstens zwei der Rastnocken (13, 14) jeweils eine Durchgangsbohrung (17, 18) aufweisen.

12. Befestigunganordnung nach einem der Ansprüche 1 bis 11, **dadurch gekennzeichnet, daß** jede Kettenlasche (2, 3) in einer sich in Längsrichtung verlaufenden Randfläche (4) eine Aussparrung (27) zur form-und/oder kraftschlüssigen Halterung der Befestigungseinheit (8) aufweist.

13. Befestigungskettenglied, insbesondere ein Endbefestigungskettenglied, einer Energieführungskette das zwei voneinander beabstandete einander gegenüberliegende Kettenlaschen (2, 3) mit Rand- und Seitenflächen (4, 5, 6) und wenigstens eine die Kettenlaschen (2, 3) verbindende Traverse (7) aufweist, sowie mit einer Befestigungseinheit (8), die sich in Längsrichtung der Kettenlaschen (2, 3) erstreckende, voneinander beabstandete Stege (9, 10) hat, **dadurch gekennzeichnet, daß** die Befestigungseinheit (8), die Traverse (7) und/oder wenigstens eine Kettenlasche (2, 3) zusammenwirkende Verbindungsmittel (13, 14, 20, 21, 22, 23, 26, 27) aufweisen, wodurch die Befestigungseinheit (8), vorzugsweise lösbar, mit einwärts in das oder einwärts in das und auswärts aus dem Kettenglied (1) gerichteten Stegen (9, 10) mit der Traverse (7) und/oder wenigstens einer Kettenlasche (2, 3) verbindbar ist.

## Claims

1. Fastening arrangement having a chain link (1) which has two link plates (2, 3), located spaced apart opposite one another, with edge and side faces (4, 5, 6) and at least one crossmember (7) which connects the link plates (2, 3) and having a fastening unit (8) which has webs (9, 10) which are spaced apart and extend in the longitudinal direction of the link plates (2, 3), **characterized in that** the fastening unit (8), the crossmember (7) and/or at least one link plate (2, 3) have interacting connecting means (13, 14, 20, 21, 22, 23, 26, 27), by means of which the fastening unit (8) can be connected to the crossmember (7) and/or at least one link plate (2, 3) by webs (9, 10) which are directed inwards into or inwards into and outwards out of the chain link (1).

2. Fastening arrangement according to claim 1, **characterized in that** the fastening unit (8) has connecting means (20, 21) which engage at least partially around the crossmember (7).

3. Fastening arrangement according to claim 2, **characterized in that** the connecting means has at least one stop (20, 21) which can be brought at least to rest against an edge region of the crossmember (7) running essentially transversely to the longitudinal direction of the chain link (1).

4. Fastening arrangement according to claim 3, **characterized in that** the crossmember (7) is arranged between two stops (20, 21) configured as connecting means.

5. Fastening arrangement according to claim 3 or 4, **characterized in that** the stop (20, 21) is formed by a rib.

6. Fastening arrangement according to claim 3, 4 or 5, **characterized in that** the webs (9, 10) are at least partially formed onto the stops (20, 21).

7. Fastening arrangement according to one of claims 1 to 6, **characterized in that** the crossmember (7) is arranged at a distance from the edge faces (4) running in the longitudinal direction, the fastening unit (8), preferably bearing against the crossmember (7), being at least partially aligned with the edge faces (4) extending in the longitudinal direction.

8. Fastening arrangement according to claim 7, **characterized in that** the crossmember (7) has connecting means in the form of at least one engagement cam (13, 14) which engages in a corresponding receiver (22, 23, 26) of the fastening unit (8).

9. Fastening arrangement according to claim 8, **characterized in that** the crossmember (7) has at least two engagement cams (13, 14) which are arranged spaced apart on a line running essentially transversely to the longitudinal direction.

10. Fastening arrangement according to claim 8 or 9, **characterized in that** the engagement cams (13, 14) are at least partially flush with the edge faces (4) running in the longitudinal direction.

11. Fastening arrangement according to claim 8, 9 or 10, **characterized in that** at least two of the engagement cams (13, 14) each have a through-bore (17, 18).

12. Fastening arrangement according to one of claims 1 to 11, **characterized in that** each link plate (2, 3) has, in an edge face (4) running in the longitudinal direction, a recess (27) for the positive-locking and/or non-positive holding of the fastening unit (8).

13. Fastening chain link, in particular and end fastening chain link, of an energy conducting chain, which link has two link plates (2, 3), located spaced apart opposite one another, with edge and side faces (4, 5, 6) and at least one crossmember (7) which connects the link plates (2, 3), and having a fastening unit (8) which has webs (9, 10) which are spaced apart and extend in the longitudinal direction of the link plates (2, 3), **characterized in that** the fastening unit (8), the crossmember (7) and/or at least one link plate (2, 3) have interacting connecting means (13, 14, 20, 21, 22, 23, 26, 27), by means of which the fastening unit (8) can be connected, preferably in a releasable manner, to the crossmember (7) and/or at least one link plate (2, 3) with webs (9, 10) directed inwards into or inwards into and outwards out of the chain link (1).

## Revendications

1. Ensemble de fixation comportant un chaînon (1) qui présenté deux éclisses de chaîne (2, 3), se trouvant à distance l'une de l'autre et étant disposées en vis-à-vis l'une par rapport à l'autre avec des faces de bord et des faces latérales (4, 5, 6), et qui présente au moins une traverse (7) reliant les éclisses de chaîne (2, 3), l'ensemble de fixation comportant en outre une unité de fixation (8) qui présente des entretoises (9, 10) à distance l'une de l'autre et s'étendant en direction longitudinale des éclisses de chaîne (2, 3), **caractérisé en ce que** l'unité de fixation (8), la traverse (7) et/ou au moins une éclisse de chaîne (2, 3) ont des moyens de liaison (13, 14, 20, 21, 22, 23, 26, 27) coopérant, au moyen desquels l'unité de fixation (8) peut être reliée avec la traverse (7) et/ou avec au moins une éclisse de chaîne (2, 3) au moyen d'entretoises (9, 10) orientées vers l'intérieur ou vers l'intérieur et vers l'extérieur du chaînon (1).

2. Ensemble de fixation selon la revendication 1, **caractérisé en ce que** l'unité de fixation (8) présente des moyens de liaison (20, 21), qui enserrent au moins partiellement la traverse (7).

3. Ensemble de fixation selon la revendication 2, **caractérisé en ce que** le moyen de liaison a au moins une butée (20, 21) qui peut au moins être amenée en application contre une zone de bord de la traverse (7), laquelle zone de bord s'étend sensiblement de manière transversale à la direction longitudinale du chaînon (1).

4. Ensemble de fixation selon la revendication 3, **caractérisé en ce que** la traverse (7) est agencée entre deux butées (20, 21) formées en tant que moyens de liaison.

5. Ensemble de fixation selon la revendication 3 ou 4, **caractérisé en ce que** la butée (20, 21) est formée par une nervure.

6. Ensemble de fixation selon la revendication 3, 4 ou 5, **caractérisé en ce que** les entretoises (9, 10) sont au moins partiellement formées sur les butées (20, 21).

7. Ensemble de fixation selon l'une des revendications 1 à 6, **caractérisé en ce que** la traverse (7) est agencée à distance des faces de bord (4) qui s'étendent en direction longitudinale, l'unité de fixation (8), qui de préférence s'applique contre la traverse (7), s'alignant au moins partiellement avec les faces de bord (4) qui s'étendent en direction longitudinale.

8. Ensemble de fixation selon la revendication 7, **caractérisé en ce que** la traverse (7) présente des moyens de liaison en forme d'au moins une came d'arrêt (13, 14) qui s'engage dans un logement (22, 23, 26) correspondant de l'unité de fixation (8).

9. Ensemble de fixation selon la revendication 8, **caractérisé en ce que** la traverse (7) présente au moins deux cames d'arrêt (13, 14) à distance l'une de l'autre et agencées sur une ligne s'étendant sensiblement de manière transversale à la direction longitudinale.

10. Ensemble de fixation selon la revendication 8 ou 9, **caractérisé en ce que** les cames d'arrêt (13, 14) sont au moins partiellement en alignement avec les faces de bord (4) s'étendant en direction longitudinale.

11. Ensemble de fixation selon la revendication 8, 9 ou 10, **caractérisé en ce qu'**au moins deux des cames d'arrêt (13, 14) présentent respectivement un alésage débouchant (17, 18).

12. Ensemble de fixation selon l'une des revendications 1 à 11, **caractérisé en ce que** chaque éclisse de chaîne (2, 3) présente dans une face de bord (4), s'étendant en direction longitudinale, un évidement (27) pour la retenue par coopération de formes et/ou par coopération de forces de l'unité de fixation (8).

13. Chaînon de fixation, notamment un chaînon de fixation d'extrémité d'une chaîne conductrice d'énergie, qui présente deux éclisses de chaîne (2, 3) à distance l'une de l'autre et étant disposées en vis-à-vis l'une par rapport à l'autre avec des faces de bord et des faces latérales (4, 5, 6) et qui présente au moins une traverse (7) reliant les éclisses de chaîne (2, 3), et présentant une unité de fixation (8) qui a des entretoises (9, 10) à distance l'une de l'autre et s'étendant en direction longitudinale des éclisses de chaîne (2, 3), **caractérisé en ce que** l'unité de fixation (8), la traverse (7) et/ou au moins une éclisse de chaîne (2, 3) ont des moyens de liaison (13, 14, 20, 21, 22, 23, 26, 27) coopérant, au moyen desquels l'unité de fixation (8) peu être reliée, de préférence de manière détachable, avec la traverse (7) et/ou avec au moins une éclisse de chaîne (2, 3) au moyen d'entretoises (9, 10) orientées vers l'intérieur ou vers l'intérieur et vers l'extérieur du chaînon (1).
